# EUROPÄISCHE PATENTANMELDUNG

(11) **EP 2 618 022 A1**
(43) Veröffentlichungstag der Anmeldung: **24.07.2013**
(21) Anmeldenummer: 12000316.5
(22) Anmeldetag: 19.01.2012
(51) Int. Cl.: F16G 3/04, F16G 3/10

(54) **Endloses Förderband**

(71) Anmelder: Zwaans, Joseph, 66954 Pirmasens (DE)
(72) Erfinder: Zwaans, Joseph, 66954 Pirmasens (DE)
(74) Vertreter: Patentanwälte Dr. Keller, Schwertfeger

(57) **Zusammenfassung**

Die Erfindung betrifft ein endloses Förderband (10) sowie ein Verfahren zu dessen Herstellung. Das Förderband (10) umfasst wenigstens einen elastischen, gewirkten Stoffbahnabschnitt (11), der an zwei Enden (18A, 18B) in einem Verbindungsabschnitt (12) miteinander verbunden ist, wobei auf der Oberseite des Stoffbahnabschnitts (11) entlang einer Verbindungslinie der beiden Enden (18A, 18B) überlappend mit den beiden Enden (18A, 18B) des Stoffbahnabschnitts (11) ein oberes Abdeckband (14) und auf der Unterseite des Stoffbahnabschnitts (11) entlang der Verbindungslinie ein unteres Abdeckband (16) überlappend mit den beiden Enden des Stoffbahnabschnitts (11) angeordnet sind und das obere bzw. untere Abdeckband (14, 16) jeweils an den beiden Enden (18A, 18B) des Stoffbahnabschnitts (11) befestigt sind und wobei die beiden Enden (18A, 18B) des Stoffbahnabschnitts (11) nebeneinander angeordnet und mittels einer Naht (20) geheftet sind und das obere und untere Abdeckband (14, 16) jeweils mit dem Stoffbahnabschnitt (11) verklebt und/oder verschweißt sind.

## Beschreibung

Die vorliegende Erfindung betrifft ein endloses Förderband nach dem Oberbegriff des Anspruchs 1 sowie ein Verfahren zur Herstellung eines solchen Förderbandes nach Anspruch 10.

Endlose elastische Förderbänder werden beispielsweise bei der Lederverarbeitung eingesetzt.

Bei der Bearbeitung von Leder finden elastische Förderbänder z.B. in Stollmaschinen zum Weichmachen und Strecken von Leder ihren Einsatz. Hierbei wirken obere und untere Stollwerkzeuge auf das zu verarbeitende Leder, das zwischen einem oberen und einem unteren elastischen Transportband durch die Bearbeitungszone transportiert wird.

Da zur Weichmachung und Streckung von Leder bekanntlich hohe Kräfte erforderlich sind, sind die Anforderungen an die elastischen Förderbänder sehr hoch. So muss das Material einerseits elastisch, andererseits aber auch sehr strapazierfähig, insbesondere reißfest und abriebsarm sein.

Geeignete Materialien sind beispielsweise elastische Gewirke aus Natur- oder Kunststofffasern. Diese Stoffe werden jedoch nur als Meterware hergestellt. Um aus der Meterware endlose Förderbänder zu konfektionieren, werden ein oder mehrere Bahnabschnitte in entsprechende Längen und Breiten abgeschnitten und die Abschnitte zu einem Endlosband zusammengefügt.

Bisher ist es üblich, den Stoffbahnabschnitt bzw. die Stoffbahnabschnitte über eine Naht miteinander zu verbinden, wobei zum Schutz der den Stoffbahnabschnitt/ die Stoffbahnabschnitte verbindenden Naht vor starken Reibungskräften ein oberes und ein unteres gewirktes Abdeckband jeweils auf der Unterseite und Oberseite des Förderbandes vorgesehen sind, die die Naht bedecken. Die entlang der Naht angeordneten Abdeckbänder sind so breit gestaltet, dass sie jeweils mit den beiden Enden des Stoffbahnabschnitts bzw. der Stoffbahnabschnitte überlappen und an den Enden des Stoffbahnabschnitts/der Stoffbahnabschnitte festgenäht werden können. Hierbei werden Zickzack-Nähte verwendet, um eine stabile Nahtverbindung zwischen Abdeckband und Stoffbahnabschnitt/Stoffbahnabschnitte zu erhalten. Um eine strapazierfähige Nahtverbindung zu erhalten, sind viele Zickzack-Nähte erforderlich. Dies hat jedoch den Nachteil, dass das Förderband an der Verbindungsstelle immer härter, d.h. unelastischer und dicker wird.

Die Folge ist, dass die im Vergleich zum Förderband dickere und unelastischere Verbindungsstelle Abdrücke auf dem zu bearbeitenden Leder hinterlässt.

Darüber hinaus unterliegen insbesondere die Zickzack-Nähte auf der Oberseite des Förderbandes einer starken Reibung während des Verarbeitungsvorgangs, beispielsweise in einer Stollmaschine, so dass die Fasern des Nähfadens aufgeraut und schließlich durchgescheuert werden, was dazu führt, dass sich die gesamte Zickzack-Naht auflöst und das Förderband dadurch beschädigt wird. Das Förderband erfüllt seine Funktion nicht mehr und muss ausgetauscht werden.

Es ist Aufgabe der vorliegenden Erfindung, ein endloses Förderband bereitzustellen, das diese Nachteile nicht aufweist und das insbesondere einen dünnen und strapazierfähigen Verbindungsabschnitt aufweist.

Erfindungsgemäß wird die Aufgabe dadurch gelöst, dass bei einem gattungsgemäßen endlosen Förderband die Enden wenigstens eines Stoffbahnabschnitts nebeneinander angeordnet und mittels einer Naht geheftet sind und das obere und untere Abdeckband jeweils mit dem wenigstens einen Stoffbahnabschnitt verklebt und/oder verschweißt sind.

Dadurch, dass das obere und das untere Abdeckband mit dem wenigstens einen Stoffbahnabschnitt verklebt und/oder verschweißt sind, entfallen die Nähte auf der Ober- bzw. Unterseite des Förderbandes. Dies hat zum einen den Vorteil, dass sich kein Faden während des Einsatzes des Förderbandes mehr aufreiben kann und zum anderen, dass der Aufbau des Verbindungsabschnittes eine deutlich geringere Höhe aufweist als beim Stand der Technik.

Gemäß einer bevorzugten Ausführungsform sind die beiden Enden des Stoffbahnabschnitts auf Stoß angeordnet. Auf diese Weise können die beiden Enden des Stoffbahnabschnitts mittels beispielsweise einer Zickzacknaht vergleichsweise fest miteinander verbunden werden.

Um auch im Bereich des Verbindungsabschnittes die geforderte Elastizität des Endlosbandes zu erhalten, bestehen das obere und das untere Abdeckband aus einem elastischen Material.

Hierbei kann jede Art von elastischem Material gewählt werden, beispielsweise ein elastisches Folienband. Gemäß einer vorteilhaften Ausführungsform besteht das obere und untere Abdeckband aus einem elastischen Gewirke, beispielsweise aus Polyamid oder Polyester.

Bei einer alternativen Ausführungsform können das obere und untere Abdeckband aus einem nicht-elastischen Material bestehen.

Um den Störeinfluss des Verbindungsabschnittes weiter zu minimieren, werden bevorzugt das obere und das untere Abdeckband aus einem elastischen Material hergestellt, wobei das obere und das untere Abdeckband in Laufrichtung des Förderbandes und quer zur Laufrichtung des Förderbandes im Wesentlichen die gleiche Elastizität aufweisen.

Gemäß einer vorteilhaften Ausführungsform weisen das obere und das untere Abdeckband eine unterschiedliche Länge in Laufrichtung des Förderbandes auf. Hiermit kann die relative Dickenänderung in Laufrichtung des Förderbandes minimiert werden, so dass der Einfluss des Verbindungsabschnitts auf das auf dem Förderband liegende Material reduziert wird.

Gegenstand der vorliegenden Erfindung ist ebenfalls ein Verfahren zur Herstellung eines endlosen Förderbandes gemäß Anspruch 10.

Eine bevorzugte Ausführungsform der Erfindung wird anhand der beigefügten Zeichnungen beschrieben, in denen zeigen:
- Fig. 1: eine Draufsicht auf ein endloses Förderband in zerlegter Darstellung im Bereich eines Verbindungsabschnitts,
- Fig. 2: einen Querschnitt durch ein endloses Förderband im Bereich eines Verbindungsabschnitts.

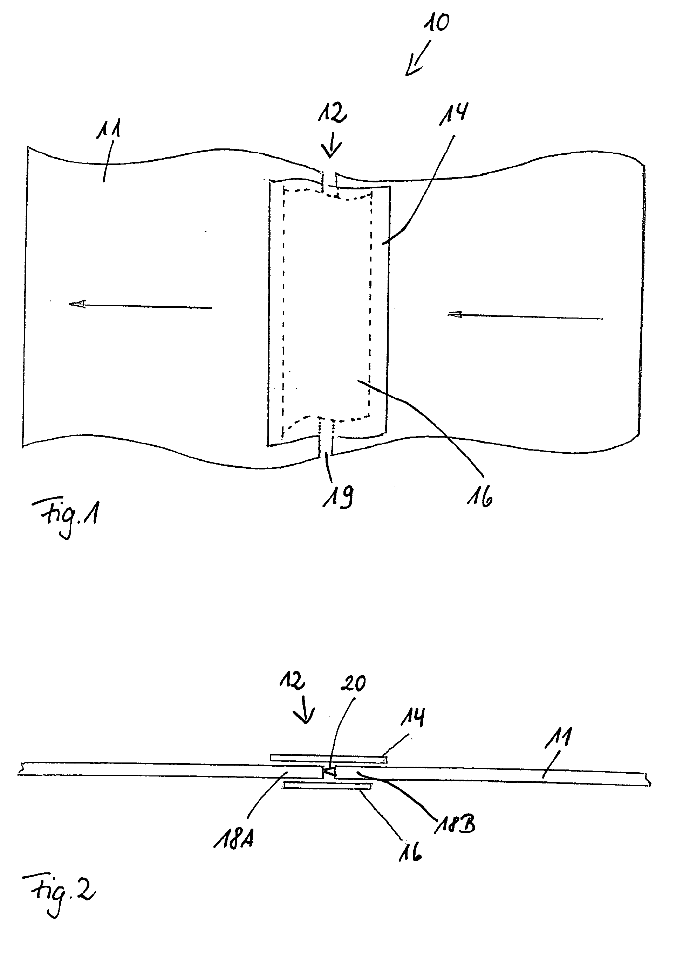

Fig. 1 zeigt ein endloses Förderband 10 mit einem Verbindungsabschnitt 12 in zerlegter Darstellung in Draufsicht.

Das Förderband 10 besteht aus einem elastischen, gewirkten Stoffbahnabschnitt 11, welcher aus Polyamid oder Polyester hergestellt ist. Anstelle eines Gewirkes aus Polyamid oder Polyesters sind auch andere Arten von Materialien einsetzbar, die die entsprechende Elastizität und Strapazierbarkeit, d.h. Reißfestigkeit bzw. Abriebsfestigkeit, aufweisen. Beispielsweise können auch Gewirke aus Natur- oder andere Kunststofffasern eingesetzt werden.

Auf der Oberseite des Förderbandes 10 ist im Bereich des Verbindungsabschnitts 12 ein oberes Abdeckband 14 und auf der Unterseite des Förderbandes 10 ein unteres Abdeckband 16 vorgesehen. Das obere Abdeckband 14 und untere Abdeckband 16 sind ebenfalls ein Gewirke, das aus Polyamid oder Polyester hergestellt ist. Wie bei dem Förderband 10 können statt des Polyamids oder Polyesters auch andere Natur- oder Kunststofffasern verwendet werden. Anstelle eines Gewirkes ist im Rahmen der Erfindung auch der Einsatz von elastischen Folienbändern beispielsweise aus Kunststoff möglich. Den verwendeten Materialen ist gemeinsam, dass sie eine hohe Strapazierbarkeit in Bezug auf Reißfestigkeit und Abriebsfestigkeit aufweisen.

Das obere Abdeckband 14 und das untere Abdeckband 16 weisen vorteilhafterweise in Laufrichtung L und quer zur Laufrichtung L des Förderbandes die gleiche Elastizität auf wie das Förderband 10.

Wie insbesondere Fig. 2 zeigt, sind zur Ausbildung eines endlosen Förderbandes 10 zwei entgegengesetzt liegende Enden 18A und 18B des Stoffbahnabschnitts 11 gegenüberliegend und nebeneinander, d.h. nicht überlappend, vorzugsweise auf Stoß, angeordnet und bilden eine Verbindungslinie 19 aus. Die nebeneinander angeordneten Enden 18A und 18B des Stoffbahnabschnitts 11 sind mittels einer Naht 20 wie etwa einer Zickzacknaht aneinander geheftet.

Das obere Abdeckband 14 und das untere Abdeckband 16 sind entlang der Verbindungslinie 19 angeordnet und überlappen jeweils mit den gegenüberliegenden Enden 18A und 18B des Stoffbahnabschnitts 11. Das obere Abdeckband 14 und das untere Abdeckband 16 erstrecken sich im Wesentlichen über die gesamte Breite des Förderbandes 10.

Hierbei weist das obere Abdeckband 14 in Laufrichtung L des Förderbandes 10 eine größere Länge auf als das untere Abdeckband 16. Bei einer nicht dargestellten alternativen Ausführungsform weist das

Das obere Abdeckband 14 und das untere Abdeckband 16 sind mit dem Förderband 10 verschweißt. Anstelle des Verschweißens ist auch ein Verkleben und/oder Verschweißen möglich.

Bei der dargestellten Ausführungsform besteht das Förderband 10 aus einem einzigen Stoffbahnabschnitt. Bei einer nicht dargestellten Ausführungsform ist zur Herstellung von sehr breiten oder sehr langen Förderbändern eine Vielzahl von Stoffbahnabschnitten vorgesehen, die miteinander verbunden sind und das Förderband ausbilden. Die einzelnen Stoffbahnabschnitte sind auf die gleiche Art und Weise miteinander verbunden wie die beiden Enden der in Fig. 1 und 2 dargestellten Ausführungsform.

Zur Herstellung des endlosen Förderbandes 10 werden zwei entgegengesetzt liegende Enden 18A und 18B des Stoffbahnabschnitts 11 gegenüberliegend angeordnet, um die Grundform eines Bandes auszubilden. Die beiden Enden 18A und 18B werden nebeneinander, vorzugsweise auf Stoß, gelegt, so dass sich eine Verbindungslinie 19 ausbildet. Die beiden Enden 18A und 18B werden mittels einer Naht 20 aneinander geheftet. Auf der Oberseite des Förderbandes 10 wird ein oberes Abdeckband 14 und auf der Unterseite des Förderbandes 10 wird ein unteres Abdeckband 16 jeweils entlang der Verbindungslinie 19 bzw. Naht 20 angeordnet, wobei die Abdeckbänder 14, 16 jeweils mit den Enden 18A und 18B des Stoffbahnabschnitts 11 überlappen. Die Abdeckbänder 14, 16 werden mittels Verkleben und/oder Verschweißen fest mit dem Stoffbahnabschnitt 11 verbunden.

Bei einer nicht dargestellten alternativen Ausführungsform weist das obere Abdeckband 14 in Laufrichtung L des Förderbandes 10 die gleiche Länge wie das untere Abdeckband 16 auf.

Bei der dargestellten Ausführungsform wurde als oberes und unteres Abdeckband ein Band aus einem elastischen Material verwendet. Im Rahmen der Erfindung ist es auch möglich ein Band aus einem nicht-elastischen Material einzusetzen.

## Patentansprüche

1. Endloses Förderband (10), umfassend wenigstens einen elastischen, gewirkten Stoffbahnabschnitt (11), der an zwei Enden (18A, 18B) in einem Verbindungsabschnitt (12) miteinander verbunden ist, wobei auf der Oberseite des Stoffbahnabschnitts (11) entlang einer Verbindungslinie der beiden Enden (18A, 18B) überlappend mit den beiden Enden (18A, 18B) des Stoffbahnabschnitts (11) ein oberes Abdeckband (14) und auf der Unterseite des Stoffbahnabschnitts (11) entlang der Verbindungslinie ein unteres Abdeckband (16) überlappend mit den beiden Enden des Stoffbahnabschnitts (11) angeordnet sind und das obere bzw. untere Abdeckband (14, 16) jeweils an den beiden Enden (18A, 18B) des Stoffbahnabschnitts (11) befestigt sind, **dadurch gekennzeichnet, dass** die beiden Enden (18A, 18B) des Stoffbahnabschnitts (11) nebeneinander angeordnet und mittels einer Naht (20) geheftet sind und das obere und untere Abdeckband (14, 16) jeweils mit dem Stoffbahnabschnitt (11) verklebt und/oder verschweißt sind.

2. Endloses Förderband nach Anspruch 1, **dadurch gekennzeichnet, dass** die beiden Enden (18A,18B) des Stoffbahnabschnitts auf Stoß angeordnet sind.

3. Endloses Förderband nach einem der vorhergehenden Ansprüche, **dadurch gekennzeichnet, dass** der Stoffbahnabschnitt (11) aus Polyamid oder Polyester hergestellt ist.

4. Endloses Förderband nach einem der vorhergehenden Ansprüche, **dadurch gekennzeichnet, dass** das obere und untere Abdeckband (14, 16) aus einem elastischen Material bestehen.

5. Endloses Förderband nach einem der vorhergehenden Ansprüche, **dadurch gekennzeichnet, dass** das obere und untere Abdeckband (14, 16) ein elastisches Gewirke, insbesondere aus Polyamid oder Polyester, ist.

6. Endloses Förderband nach einem der vorhergehenden Ansprüche, **dadurch gekennzeichnet, dass** das obere und untere Abdeckband (14, 16) aus einem elastischen Material hergestellt sind und dass das obere und untere Abdeckband (14, 16) in Laufrichtung (L) des Förderbandes (10) und quer zur Laufrichtung (L) des Förderbandes (10) im Wesentlichen die gleiche Elastizität aufweisen.

7. Endloses Förderband nach einem der Ansprüche 1 bis 3, **dadurch gekennzeichnet, dass** das obere und untere Abdeckband (14, 16) aus einem nicht-elastischen Material bestehen.

8. Endloses Förderband nach einem der vorhergehenden Ansprüche, **dadurch gekennzeichnet, dass** das obere Abdeckband (14) und das untere Abdeckband (16) eine unterschiedliche Länge in Laufrichtung des Förderbands aufweisen.

9. Endloses Förderband nach einem der vorhergehenden Ansprüche, **dadurch gekennzeichnet, dass** es für den Einsatz in einer Stollmaschine geeignet ist.

10. Verfahren zur Herstellung eines endlosen Förderbandes (10) nach einem der Ansprüche 1 bis 9, **gekennzeichnet durch** die Schritte:
- Nebeneinander Anordnen von zwei Enden (18A, 18B) wenigstens eines Stoffbahnabschnitts, so dass eine freie Verbindungslinie (19) ausbildet wird,
- Verbinden der beiden Enden (18A, 18B) entlang der Verbindungslinie mittels einer Naht (20),
- Anordnen des oberen Abdeckbandes (14) und des unteren Abdeckbandes (16) auf der Oberseite des Förderbandes (10) bzw. Unterseite des Förderbands, wobei das obere und untere Abdeckband (14, 16) jeweils entlang der Verbindungslinie angeordnet sind und jeweils mit den Enden (18A, 18B) des Stoffbahnabschnitts (11) überlappen,
- Befestigen des oberen und unteren Abdeckbandes (14, 16) mittels Verkleben und/oder Verschweißen.

11. Verfahren nach Anspruch 10, **dadurch gekennzeichnet, dass** die beiden Enden (18A, 18B) des Stoffbahnabschnitts auf Stoß angeordnet werden.

12. Verfahren nach Anspruch 10 oder 11, **dadurch gekennzeichnet, dass** die beiden Enden (18A, 18B) zwei entgegengesetzt liegende Enden eines Stoffbahnabschnitt (11) sind und zur Ausbildungen einer endlosen Bandform miteinander verbunden werden.

13. Verfahren nach einem der Ansprüche 10 bis 12, **dadurch gekennzeichnet, dass** zwei Stoffbahnabschnitte vorgesehen sind und die beiden Enden jeweils ein Ende eines Stoffbahnabschnitts sind und die beiden Stoffbahnabschnitte gemäß Anspruch 10 oder 11 miteinander verbunden werden.
